# EUROPEAN PATENT APPLICATION

(11) **EP 0 949 808 A2**
(43) Date of publication of application: **13.10.1999**
(21) Application number: 99250047.0
(22) Date of filing: 19.02.1999
(51) Int. Cl.: H04N 5/00

(54) **PID filter circuit and FIFO circuit**

(30) Priority: 20.02.1998 JP 3886698
(71) Applicant: NEC CORPORATION, Tokyo (JP)
(72) Inventor: Sato, Shinobu, Minato-ku, Tokyo (JP)
(74) Representative: Patentanwälte Wenzel & Kalkoff

(57) **Abstract**

A PID (Packet Identifier) filter circuit and an FIFO (First-in, First-out) circuit in which when there is implemented a filtering of an input packet data in answer to the PID included in the packet data, one can cope with the corresponding length of the word of die PID or position of the PID in the packet without enlarging circuit scale. There is provided, with a comparison value table for storing therein comparison values beforehand, a comparator for extracting a comparison value successively from the comparison value table, and for comparing the value of the PID in the input packet data with the comparison value taken out in every word, and a FIFO (First-in, First-out) memory for storing therein the input packet data through first-in first-out. The FIFO memory does not implement the read operation until the time when the input packet data is discriminated as being the necessary one. When the input packet data is discriminated as being the unnecessary one, it causes the input packet data to be superseded.

## Description

### BACKGROUND OF THE INVENTION

The present invention relates to a filter circuit for executing filtering in order to sample a required packet out of a data stream in which a time division transmission is implemented by a plurality of packets. More particularly this invention relates to a filter circuit for discriminating the packet by PID (packet identifier) incorporated in the packet, and to a(n) FIFO (first-in first-out) memory as being suitable for use in this filter circuit.

### DESCRIPTION OF THE PRIOR ART

There is known a method for transmitting a plurality of data by only one data stream. This method is to transmit packets through the time-division system while dividing data into units called the packet. In this case, there is added a packet identifier (PID) to respective packets in order to denote kinds of packets in terms of respective packets or which data corresponds to which packet. In many cases, the PID is included in the packet concerned. The receiving side of the data discriminates the PID of respective packets, before determining whether or not the packet is to be sampled in answer to the kind and so forth in connection with the packet discriminated previously.

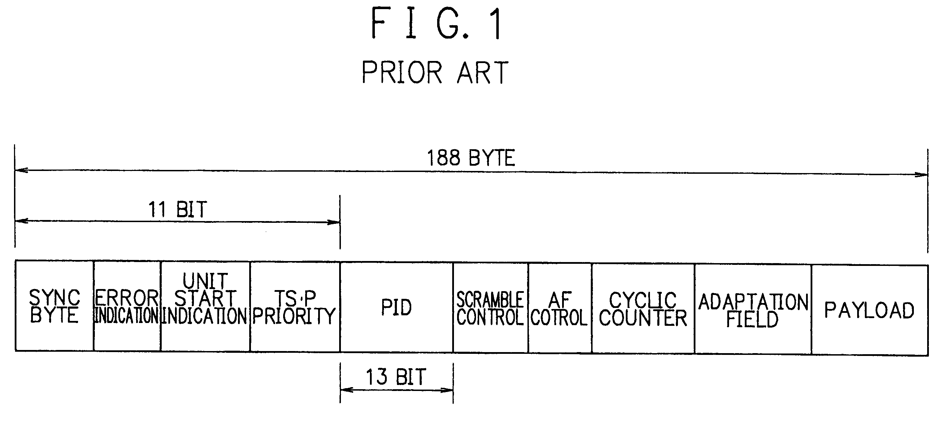

At the present time, a procedure called MPEG 2 (Moving Picture Experts Group 2) is widely used by way of a coding procedure for compression or transmission of image (or voice) data. In this MPEG 2, some kinds of packets are used. For instance, a TS (Transport Stream) packet is a packet with a fixed length of 188 bytes as shown in Fig. 1. There are allocated 13 bits from the twelfth bit from the top by way of the PID.

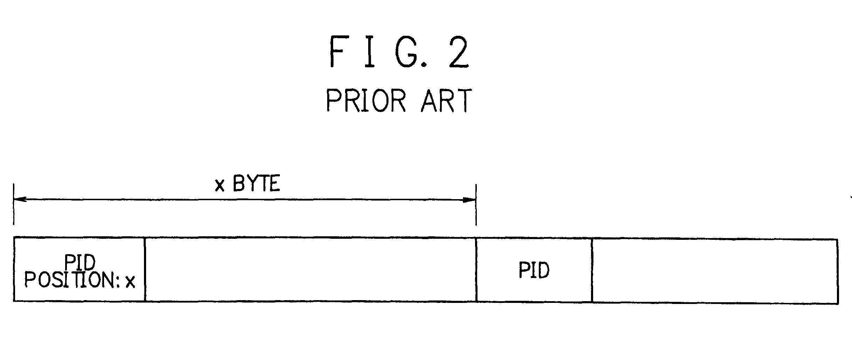

In some cases, the position of the PID in a data transmission protocol or a data transmission system is not fixed. In the packet shown in Fig. 2, the position of the PID within the packet is variable. However, as being a substitute of this state, the data (pointer for the PID) of denoting what position of the PID exists is stored in the predetermined position of the packet. In this case, as shown in Fig. 2, there is stored the pointer of the PID at the top of the packet.

In the system implementing transmission of the packet, the receiving side implements a judgement whether or not the transmitted packet is to be the object to be processed/treated, before the receiving side is to sample the necessary packet, only. The PID included in the transmitted packet is used for the sake of this judgement. Then, a PID filter circuit is used in order to sample only the packet with the required PID.

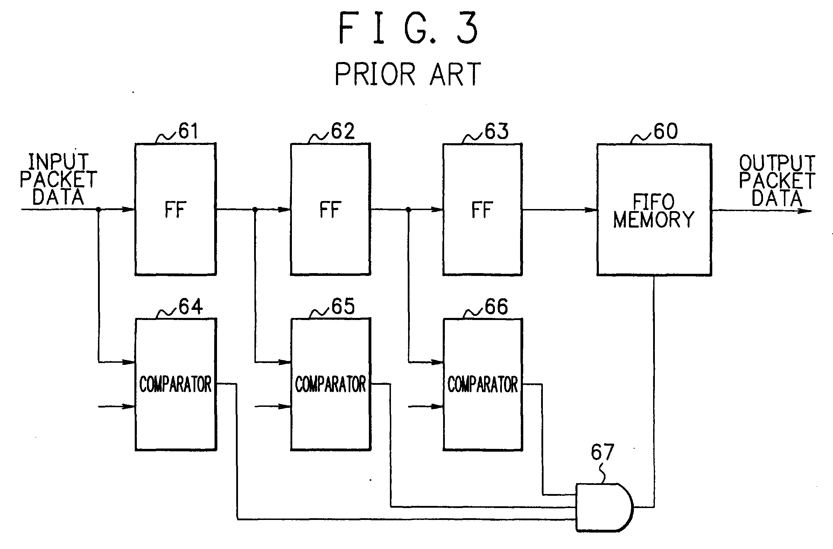

Fig. 3 is a block diagram showing one example of configuration of the conventional PID filter circuit. Here, the case is described in which the length of the PID is the corresponding length of three words as being included within the packet.

Flip-flops (FF) 61 to 63 are provided in order to delay the input data by the corresponding length of three words. The output side of the flip-flop 63 of the last stage is provided with a FIFO (First-in, First-out) memory 60 for implementing the first-in first-out operation of the data. Further, the flip-flops 61 to 63 are provided with respective comparators 64 to 66 in order to compare the input for the fip-flop with the data predetermined beforehand. The output of the comparison resuit of the respective comparators 64 to 66 is inputted to an AND gate 67 with three-input, thus there is controlled a write of the data for the FIFO memory 60 by the output of the AND gate 67.

The operation of this PID filter circuit is described as follows:

Since the respective flip-flops 61 to 63 permit the input data to be delayed in answer to the corresponding length of one word, the comparator 64 implements a comparing operation in terms of the data with the corresponding length of a present one word, the comparator 65 implements the comparing operation in terms of the data with the corresponding length of on word in front of the present one, and the comparator 66 implements the comparing operation in terms of the data with the corresponding length of one word in front of the present one by two words. For that reason, there is compared the data of continuous three words simultaneously by the flip-flops 61 to 63 and the comparators 64 to 66. When the PID within the input packet agrees with the PID established beforehand, the output of the AND gate 67 becomes "1", because the PID which is established beforehand is supplied to the respective comparators 64 to 66 by way of reference data, so that the input packet is written into the FIFO memory 60.

However, there are the following problems in this prior art.

A first problem is that the length of the PID which is the filtering object, is fixed. In the example shown in Fig. 3, there can be implemented only the comparison of the corresponding length of a three-word PID. When it is necessary to compare the corresponding length of five-words of a PID, five flip-flops and five comparators are to be provided, respectively. Furthermore, a simple AND gate for treating the comparison result on the comparator cannot be used in order to cope with an unsettled length of the PID. It becomes necessary to prepare a complicated circuit for obtaining a conjunction in accordance with the condition.

A second problem is that the position of the PID within the packet data is fixed. In the example shown in Fig. 3, it is necessary to provide the PID at the top of the packet data, in order to take the packet as being the object into the FIFO memory 60.

Here, for instance, if the PID exists at the position at the top of the packet data by the corresponding order of three words, it is necessary to provide further two flip-flops in between the flip-flop 63 and the FIFO memory 60. Furthermore, in this case, it is always necessary to include the PID in the determined position of the packet data, thus the PID filter circuit cannot be used when the position of the PID is unsettled.

As described above, there is the problem that in the conventional PID filter circuit, the length of the PID is fixed, while it is necessary to fix the PID within the packet data.

### SUMMARY OF THE INVENTION

In view of the foregoing, it is an object of the present invention to provide a PID filter circuit which is capable of coping with the change of the corresponding length of the PID or the change of the corresponding position of the PID within the packet data, and a(n) FIFO memory being in use for this PID filter circuit.

According to a first aspect of the present invention, in order to achieve the above-mentioned object, there is provided a PID filter circuit for implementing filtering of a packet data while discriminating a PID (Packet Identifler) within an input packet data, the PID filter circuit comprising a comparison value table for storing therein a comparison value beforehand, and a comparator for discriminating the stored position of the PID within the input packet data, for extracting the comparison value successively from the comparison value table, and for performing the comparison between the value of the PID and the extracted comparison value word by word.

According to a second aspect of the present invention, there is provided a PID filter circuit further comprising a FIFO (First-in, First-out) memory for storing therein the input packet data in accordance with the method of first-in first-out, the FIFO memory not executing a read operation until the time when the input packet data is discriminated as being the necessary one, while, when the input packet data is discriminated as being the unnecessary one, the PID filter circuit causes the input packet data to be cleared.

According to a third aspect of the present invention, there is provided a PID filter circuit wherein there are further provided first and second FIFO (First-In, First-Out) memories for storing the input packet data, a first switch for inputting the input packet data while selecting either one of the first and second FIFO memories, to a FIFO memory selected by the first switch, and a second switch for selecting a FIFO memory which is not selected by the first switch and for outputting an output of the FIFO memory selected by the second switch, when there is inputted the input packet data to either one FIFO memory between the first and second FIFO memories, while there is outputted an output packet data from the other FIFO memory, when the input packet data stored in one FIFO memory is the necessary one based on the result of the comparing operation in the comparator, the PID filter circuit causes the output packet data to be outputted from said one FIFO memory while changing the first and second switches. In other words, at the time the input packet data is inputted to one of the FIFO memories due to the first switch, an output packet data of the other FIFO memory is outputted due to the second switch.

According to a fourth aspect of the present invention, there is provided a FIFO circuit consisting of a FIFO memory for storing therein an input data in accordance with the method of first-in first-out, the FIFO memory comprising a dual port memory which stores therein the input data, and which is capable of executing a write operation and a read operation independently, a write pointer for maintaining a write address in terms of the dual port memory, a read pointer for maintaining a read address in terms of the dual port memory, a write control section for controlling a write operation in terms of the dual port memory, which, when there is implemented the write operation, causes the value of the write pointer to be added by "1" (one), and, when a control signal denoting that the input data is the unnecessary one is inputted, causes the value of the write pointer to be subtracted in accordance with the data quantity of the input data, and a real control section for controlling a read operation in terms of the dual port memory in answer to a read demand from the external side, which, when the read operation is implemented, causes the value of the read pointer to be added "1" (one), while, when the input data is less than a predetermined scale, no read operation is implemented regardless of the read demand.

As stated above, the PID filter circuit according to the invention stores the comparison value in the comparison value table beforehand, and the comparator reads out the comparison value from the comparison value table successively, thus executing the comparison with the PID section of the input packet data therebetween in every word by one word. For that reason, even though when the corresponding length of the word of the PID is long, it is suitable to enlarge only the comparison value table, and to prepare only one comparator.

In the configuration in which the FIFO memory is provided, this causes the input packet data to be maintained within the FIFO memory until the time at which it can be discriminated whether or not the input packet data is necessary, and when the input packet data is the necessary one, it causes the input packet data to be used as it is, while, when the input packet data is the unnecessary one, the input packet data is superseded in answer to the output of the comparator. For that reason, even though when the position of the PID within the packet data is unsettled, it can be implemented surely in the filtering of the packet without any necessity of change of the circuit and so forth.

The above and further objects and novel features of the invention will be more fully understood from the following detailed description when the same is read in connection with the accompanying drawings. It should be expressly understood, however, that the drawings are for the purpose of illustration only and not intended as limiting the invention.

### BRIEF DESCRIPTION OF THE DRAWINGS

- Fig. 1: is a view showing a configuration of a TS (Transport Stream) packet in an MPEG 2 (Moving Picture Experts Group 2);
- Fig. 2: is a view showing one example of a packet whose position of PID (Packet identifier) is variable;
- Fig. 3: is a block diagram showing the configuration of a conventional PID filter circuit;
- Fig. 4: is a block diagram showing the configuration of a PID filter circuit of a preferred embodiment of the invention;
- Fig. 5: is a block diagram showing the configuration of FIFO memory; and
- Fig. 6: is a block diagram showing the configuration of a PID filter circuit of another embodiment of the present invention.

### DETAILED DESCRIPTION OF THE PREFERRED EMBODIMENTS

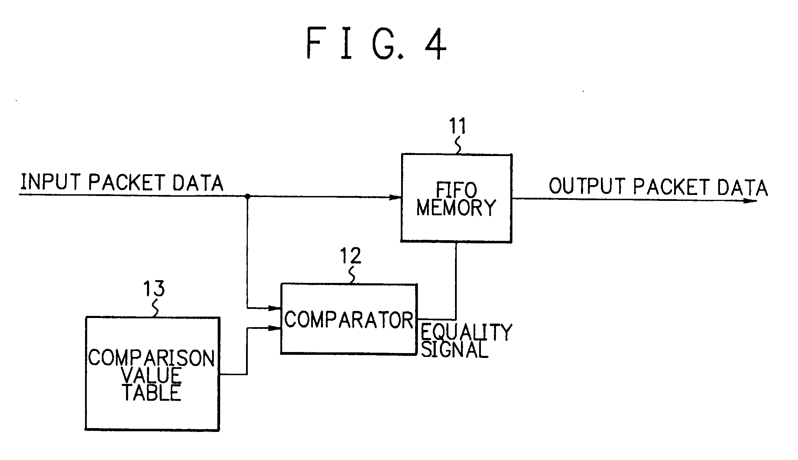

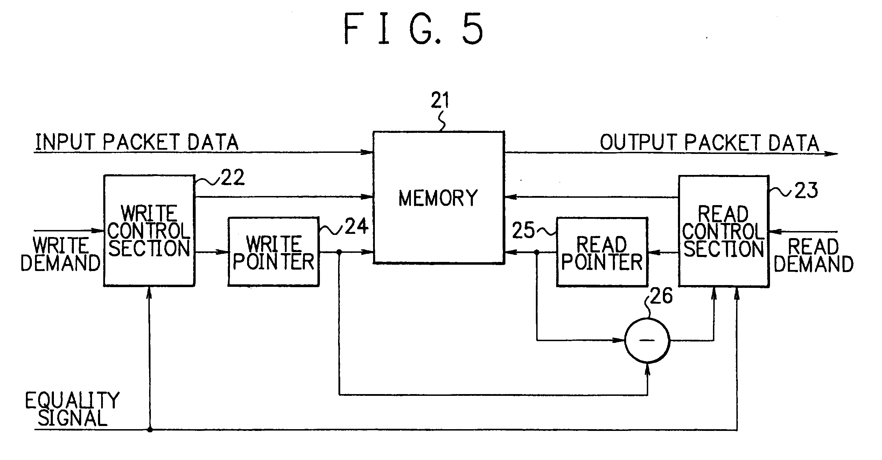

A preferred embodiment of the present invention will be described in detail in accordance with the accompanying drawings. Fig. 4 is a block diagram showing a configuration of a PID filter circuit of a preferred embodiment of the invention, and Fig. 5 is a block diagram showing an internal configuration of an FIFO memory.

The PID filter circuit shown in Fig. 4 is provided with a(n) FIFO memory 11 which is a first-in first-out memory storing therein an input packet data to output it by way of an output packet data, a comparator 12 for comparing data of respective words of respective packets of the input packet data, and a comparison value table 13 for storing therein data (comparison value) which is used as reference data in a comparing operation in the comparator 12 beforehand. Here, the FIFO memory 11 stores therein the input packet data when there is a write demand from the external side, while the FIFO memory 11 outputs the output packet data when there is read demand from the external side. Thus the operation of the FIFO memory 11 is controlled by an equality signal representing the result of comparison in the comparator 12. Concretely, the FIFO memory 11 judges whether the actual input packet data is read out in answer to the equality signal, further implementing a clearing of the data within the FIFO memory 11. The input packet data is written to the FIFO memory as it is. Further, since the comparison value table 13 is constituted by memory, the comparator 12 specifies a word order in connection with the PID in relation to the comparison value table 13, thus outputting the comparison value corresponding thereto.

Next, an internal configuration of the FIFO memory 11 using Fig. 5 is described. The FIFO memory 11 is provided with a memory 21 as being a dual port memory for storing therein the actual packet data. The memory 21 is capable of executing both of the write operation and the read operation independently, in particular, generally, implementing the write operation in accordance with the write demand from the external side. Further the FIFO memory 11 is provided with a write control section 22 for implementing a write operation to the memory 21 in accordance with the write demand from the external side, a read control section 21 for implementing read operation from the memory 21 in accordance with the read demand from the external side, a write pointer 24 for maintaining the next write address in terms of the memory 21, a read pointer 25 for maintaining the read address in terms of the memory 21, and a subtracter 26 for calculating a difference between the write address maintained by the write pointer 24 and the read address maintained by the read pointer 25. The equality signal from the comparator 12 (Fig. 4) is inputted both to the write control section 22 ad the read control section 23 by way of a control signal.

As described above, the memory 21 implements both of a write operation in accordance with control of the write control section 22 and a read operation in accordance with the control of read control section 23. When there is inputted the write demand from the external side, the write control section 22 implements the write operation to the memory 21, thus increasing the value of the write pointer 24 by only 1 (one). Furthermore, when there is inputted the equality signal denoting that the PID is in disagreement and that the packet data is to be superseded, the write control section 22 implements annulment of the packet data by subtracting a data quantity corresponding to the data written to the memory 21 from the value of the write pointer 24 in terms of the packet data. When the read demand is inputted from the external side, the read control section 23 implements the read operation to the memory 21 in answer both to the state of the equality signal and the output of the subtracter 26. Thus the value of the read pointer 25 is increased by one "1". Particularly, when the equality signal is not an equality signal representing the complete agreement and when the output value of the subtracter 26 is less than the corresponding length of the packet, the read control section 23 does not execute the read operation regardless of the existence of the read demand.

Next, the operation of the PID filter circuit will be described. A fundamental operation of the PID filter circuit is that when the input packet data is entered, it causes the packet data to be written to the FIFO memory 11 successively. Simultaneously, the comparator 12 compares the data (comparison value) read out from the comparison value table 13 with the input packet data. Only one comparator 12 is in use regardless of the word length of the PID or the position thereof. When the length of the PID is more than the corresponding length of two words, it causes the comparison value to be read from the comparison value table 13 successively, thus executing the comparing operation successively. Furthermore, the FIFO memory 11 does not output the packet data at that time when the comparator 12 is in the comparing operation, even though there is the read demand from the external side. Moreover, in the result of comparison, when there is disagreement, this causes the data to be superseded in terms of the data written to the FIFO memory 11 up to that time. On account of the above operation, the circuit shown in the present embodiment can operate by way of a packet ID (PID) filter.

Hereinafter, the operation of the PID filter circuit will be described in further detail.

The input packet data possesses specific PID in every packet described above. For that reason, there is established the PID of the necessary packet data out of packet data being transmitted, in the comparison value table 13 beforehand. When the PID section of the input data packet is transmitted, the comparator 12 reads out the PID established beforehand from the comparison value table 13, before comparing whether or not the PID section of the input data packet agrees with the PID established beforehand.

In general, the FIFO memory implements the read operation if the data is retained within the FIFO memory in response to the read demand from the external side, while the FIFO memory does not implement the read operation if the data does not remain within the FIFO memory. However, in this case of the PID circuit, it is not discriminated whether or not the input packet data is a packet data being necessary whilst the comparator 12 compares the PID. For that reason, in this PID filter circuit, it is established that in response to the read demand, when the data with a corresponding length of more than one packet is within the FIFO memory 11, the read operation is implemented, while when the data with a corresponding length of less than one packet is within the FIFO memory 11, the read operation is not implemented. The corresponding length of the data stored in the FIFO memory 11 is denoted by the output of the subtracter 26 because it is the difference between the next write address and the next read address. Further, in the result of comparison by the comparator 12, when the input packet data is not the packet data which is desired, at this time, the packet data written in the FIFO memory 11 is superseded. Moreover, the PID filter circuit permits the write of the packet data to be implemented unconditionally in relation to the FIFO memory 11. However, when there is discriminated that on the way of a packet data, the packet data is unnecessary as the result of comparison of the PID, at this time, annulment of the packet data within the FIFO memory is implemented. Since a section which does not yet arrive at the FIFO memory 11 of the packet data becomes necessary, it is also suitable that the following write operation be prohibited in relation to the FIFO memory 11 of the packet data due to the equality signal.

Next, there will be described the operation of the comparator 12. Firstly, the comparator 12 counts the data number (for instance, byte number, octet number) from the top of the input packet data. When the position of the PID is unsettled and the position information (pointer) of the PID is included in the packet data, the position information is taken in . When the position of the PID is fixed, the position is etablished beforehand by for instance, the host CPU (not illustrated). In all cases, the comparator 12 counts the data number from the top of the input packet data to be detected the data of the PID section.

When the input data arrives at the position of the PID, the comparator 12 compares a value (in this case the value of the PID) of the input packet data with a value of the comparison value table 13. The comparator 12 obtains the comparison value while directing that it is the first word to the comparison value table 13, in relation to the first one word of the PID. Subsequently, the comparator 12 compares the above comparison value with the first word of the PID, consecutively directing that it is the second word to the comparison value table 13 to obtain the comparison value. Then, the comparator 12 compares the comparison value obtained with the second word. Thus the comparator 12 compares the PID in every corresponding length of one word successively as described above. Moreover, for instance, the host CPU permits the PID as being the object to be written in the comparison value table 13 beforehand. The comparator 12 compares all the data of the comparison value table 13 with the PID within the input packet data. Only when there is agreement with regard to all data, namely, only when the PID agrees with the data from the comparison value table 13 completely, this state is communicated to the FIFO memory 11. In practice, the equality signal outputted from the comparator 12 represents that it is in the midst of the comparing operation (a waiting period is included during which the input packet data does not yet arrive at the PID), or that the PID agrees with the signal completely, or that the PID disagrees therewith.

Next, the operation in the FIFO memory 11 will be described referring to Fig. 5.

When there is the write demand in relation to the memory 21 as being the dual port memory within the FIFO memory 11, the write control section 22 causes the write operation to be implemented in terms of the memory 21. At this time, the write pointer 24 is referred to as the write address. After completion of the write operation, the value of the write pointer 24 is increased by "1" (one) in accordance with the instruction of the write control section 22. The read operation is performed in accordance with the read demand from the external side similar to the write operation. Similarly, when there is a read demand, the read control section 23 implements the read operation in relation to the memory 21. At his time, reference is made to the read pointer 23 as the read address. After completion of the read operation, the value of the read pointer 25 is increased by "1" (one) in accordance with the instruction of the read control section 23. The quantity of the data stored in the memory 21 is denoted as being the difference between the value of write pointer 24 and the value of read pointer 25. When the value of the write pointer 24 equals the value of the read pointer 25, the data is stored in the memory 21. Consequently, the read control section 23 does not reply to the read demand.

When the comparator 12 (Fig. 4) is in the comparing operation, the input packet data at this time cannot be discriminated as to whether it is the required packet data. For that reason, in the state of the comparing operation, the write operation is implemented to the memory 11. However, when the difference between the write pointer 24 and the read pointer 25 is less than the corresponding length of the packet, the read control section 23 does not reply to the read demand. Thus the read operation is not implemented. After the comparison is terminated, and when the data is the desired data (packet data in which the PID agrees therewith completely), the read control section 23 replies to the read demand. When, to the contrary, the data is not the desired data (in the case where the packet data in which the PID disagrees therewith exists), the data written in the memory 21 is superseded. The annulment of the data is realized such that there is subtracted a corresponding number of the data number written into the memory 21 from the value of the write pointer 24. Moreover, concerning certain input packet data, it can be thought that it is the packet on the way of inputting, at the time of annulment. When it is intended to prevent further storing of the data into the FIFO memory 11 without superseding further data, it is suitable to prepare the configuration such that the write control section 22 does not execute the write operation when the equality signal is inputted.

In the PID filter circuit, the comparator 12 counts the corresponding length of the data from the top of the packet data to be implemented in the comparing operation. The comparator 12 retains the packet data within the FIFO memory 11 until the time when it can be judged whether the packet data is necessary or not. The data as it is is used if necessary, while the data is superseded if unnecessary. Therefore, even though the position of the PID within the packet data is unsettled, it is possible to implement the packet filtering securely without changing circuit. Furthermore, since the comparison is implemented successively in the comparator 12 while reading out the comparison value from the comparison value table 13, the comparison is implemented by only one comparator, and even though the word length of the PID may become long, this is resolved by the fact that the comparison value table 13 is enlarged. Even if the word length of the PID becomes long, the circuit scale scarcely needs to be changed.

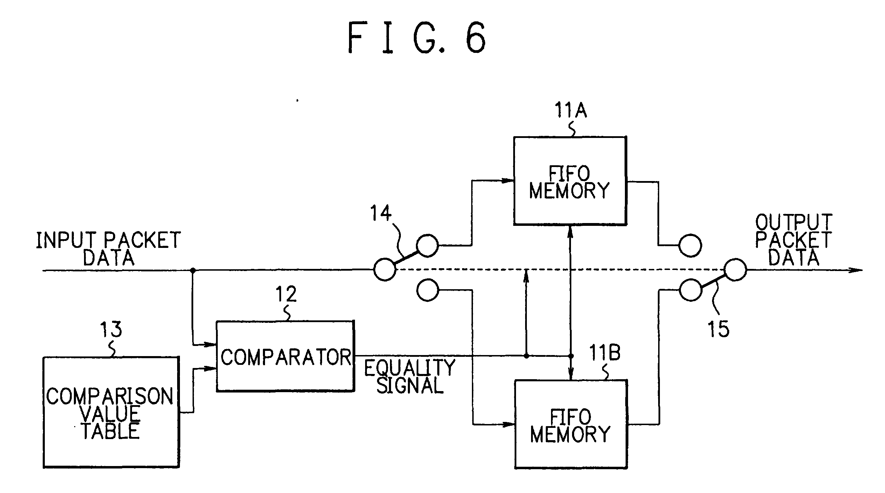

Fig. 6 is a block diagram showing a configuration of a PID filter circuit according to another embodiment of the present invention. The PID filter circuit shown in Fig. 6 is compared with the PID filter circuit shown in Fig. 4. The PID filter circuit shown in Fig. 6 is provided with two FIFO memories 11A, and 11B which are controlled by the equality signal from the comparator 12 and to which the input packet data is inputted, a switch 14 for allocating the input packet data to either one of the FIFO memories 11A, and 11B, and a switch 15 for selecting either one of the FIFO memories 11A, and 11B. In this connection the PID filter circuit shown in Fig. 6 differs from the PID filter circuit shown in Fig. 4. The switches 14 and 15 are interlocked so as to select different FIFO memories mutually, and are controlled by the equality signal.

In this PID filter circuit, when the switch 14 selects the FIFO memory 11A, the input packet data is written in the FIFO memory 11A, and simultaneously, the PID included therein is compared with the value of the comparison value table 13 by the comparator 12. During the corresponding time period, the output packet data is read out from the FIFO memory 11B, because the switch 15 selects the FIFO memory 11B. When the input packet data written in the FIFO memory 11B is the necessary packet data, it causes the switches 14, 15 to be reserved by the equality signal, thus permitting the data read out from the FIFO memory 11A to be outputted by way of the output packet data. When the input packet data written in the FIFO memory 11A is the unnecessary packet data, the data within the FIFO memory 11A is superseded. For that reason, even though the packet data is a packet data whose position of the PID is unsettled, it is capable of being selected the packet data.

As described above, according to the present invention, the comparison value read out from the comparison value table is to be utilized for comparing such comparison value with the input packet data. Therefore, even if the word length of the PID is long, this word length can be used for the required operation by enlarging the comparison value table. Thus, this can be achieved by utilizing one comparator, only. For this reason, the effect occurs that even if the word length of the PID becomes long, the circuit scale need scarcely be changed.

Furthermore, according to the present invention, with respect to the input packet data, the packet data is retained within the FIFO memory until the time when it can be discriminated whether or not the packet data is necessary. The packet data is used as it is if necessary, while the packet data is superseded if unnecessary. Therefore, even though the position of the PID is unsettled within the packet data, there is the effect that it is capable of being implemented regarding filtering of the packet surely without any necessity of changing the circuit or the like.

While preferred embodiments of the invention have been described using specific terms, such description is for illustrative purpose only, and it is to be understood that changes and variations may be made without departing from the spirit or scope of the following claims.

## Claims

1. A PID (Packet Identifier) filter circuit for implementing filtering of a packet data while discriminating a PID (Packet Identifier) within an input packet data, said circuit comprising:
a comparison value table for storing therein a comparison value beforehand; and
a comparator for discriminating the stored position of said PID within said input packet data, for extracting said comparison value successively from said comparison value table, and for performing the comparison between the value of said PID and the extracted comparison value word by word.

2. A PID filter circuit as claimed in claim 1, further comprising a FIFO (First-In, First-Out) memory for storing therein said input packet data by the method of first-in first-out, wherein said FIFO memory does not execute a read operation until the time when said input packet data is discriminated as being the necessary one, while, when said input packet data is discriminated as being the unnecessary one, said PID filter circuits causes said input packet data to be cleared.

3. A PID filter circuit as claimed in claim 1, further comprising a FIFO (First-In, First-Out) memory for storing therein said input packet data by the method of first-in first-out, wherein said FIFO memory does not execute a read operation although a read demand is inputted while said comparator executes a comparing operation.

4. A PID filter circuit as claimed in claim 1, wherein there are further provided a first and a second FIFO (First-In, First-Out) memory for storing said input packet data, a first switch for inputting said input packet data while selecting either one of said first and said second FIFO memories, to a FIFO memory selected by said first switch, and a second switch for selecting a FIFO memory which is not selected by said first switch and for outputting an output of the FIFO memory selected by said second switch, when there is inputted said input packet data to either one FIFO memory among said first and said second FIF memories, while there is outputted an output packet data from the other FIFO memory, when the input packet data stored in said one FIFO memory is the necessary one based on the result of comparing the operation in said comparator, said PID filter circuit causing the output packet data to be outputted from said one FIFO memory while changing said first and said second switches.

5. A PID filter circuit as claimed in claim 2, wherein said FIFO memory comprises:
a dual port memory which stores therein said input packet data, and which is capable of executing a write operation and a read operation independently;
a write pointer for maintaining a write address in terms of said dual port memory;
a read pointer for maintaining a read address in relation to said dual port memory;
a write control section for controlling said write operation in terms of said dual port memory, which when said write operation is implemented, causes the value of said write pointer to be added by "1" (one), and, when there is discriminated that said input packet data is the unnecessary one based on the result of comparing the operation through said comparator, the value of said write pointer is caused to be subtracted in accordance with the data quantity of said input packet data; and
a read control section for controlling a read operation in relation to said dual port memory in accordance with a read demand from the external side, which, when a read operation is implemented, causes "1" (one) to be added to the value of said read pointer, while when the data quantity within said dual port memory is less than the corresponding length of a packet of said input packet data, said read operation is not implemented regardless of said read demand.

6. A PID filter circuit as claimed in claim 5, which comprises a subtracter for calculating the difference between the value of said write pointer and the value of said read pointer to output it to said read control section as being the data quantity within said dual port memory.

7. A FIFO circuit consisting of a FIFO memory for storing therein input data in accordance with the method of first-in first-out, said FIFO memory comprising:
a dual port memory which stores therein said input data and which is capable of executing a write operation and a read operation independently;
a write pointer for maintaining a write address in relation to said dual port memory;
a read pointer for maintaining therein a read address in relation to said dual port memory;
a write control section for controlling a write operation in relation to said dual port memory, which section, when the write operation is implemented, causes "1" (one) to be added to the value of said write pointer, and when a control signal denoting that said input data is the unnecessary one is inputted, causes the value of said write pointer to be subtracted in accordance with the data quantity of said input data; and
a read control section for controlling a read operation in relation to said dual port memory in answer to a read demand from the external side, which section, when the read operation is implemented, causes "1" (one) to be added to the value of said read pointer, while when said input data is less than the predetermined scale, the read operation is not implemented regardless of said read demand.

8. An FIFO circuit as claimed in claim 7, wherein provided a subtracter is provided calculating the difference between the value of said write pointer and the value of said read pointer, and for subsequently outputting this difference to said read control section as the data quantity within said dual port memory.
